# EUROPÄISCHE PATENTSCHRIFT

(11) **EP 2 005 138 B1**
(45) Veröffentlichungstag und Bekanntmachung des Hinweises auf die Patenterteilung: **01.09.2010**
(21) Anmeldenummer: 07726430.7
(22) Anmeldetag: 20.02.2007
(51) Int. Cl.: G01N 15/06, G01N 27/22

(54) **SENSOR ZUR DETEKTION VON PARTIKELN IN EINEM FLUID UND VERFAHREN ZUR DETEKTION VON PARTIKELN IN EINEM FLUID**
SENSOR FOR DETECTING PARTICLES IN A FLUID AND METHOD FOR DETECTING PARTICLES IN A FLUID
CAPTEUR POUR LA DÉTECTION DE PARTICULES DANS UN FLUIDE ET PROCÉDÉ DE DÉTECTION DE PARTICULES DANS UN FLUIDE

(30) Priorität: 03.04.2006 DE 102006015385
(43) Veröffentlichungstag der Anmeldung: 24.12.2008
(73) Patentinhaber: Robert Bosch GmbH, 70442 Stuttgart (DE)
(72) Erfinder: SCHMIDT, Ralf, 70839 Gerlingen (DE)
(86) Internationale Anmeldenummer: PCT/EP2007/051609
(87) Internationale Veröffentlichungsnummer: WO 2007/115854

(56) Entgegenhaltungen:
- DE-A1- 4 420 193
- DE-A1- 10 133 384
- DE-A1-102004 043 122
- GB-A- 2 249 636
- US-B2- 6 803 775

## Beschreibung

### Stand der Technik

Die Erfindung geht aus von einem Sensor gemäß dem Oberbegriff des Anspruchs 1.

Ein solcher Sensor ist bereits aus der deutschen Offenlegungsschrift DE 101 33 384 A1 bekannt, der einen Sensor zur Detektion von Teilchen und ein Verfahren zur dessen Funktionskontrolle offenbart. Hierbei weist dieser bekannte Sensor zur Detektion von Teilchen eine Messelektrodenanordnung auf, wobei sich Teilchen in einem Gasstrom, insbesondere Rußpartikel in Abgas, derart eingefangen werden, dass die Teilchen sich auf dem Substrat ablagern.

### Offenbarung der Erfindung

Der erfindungsgemäße Sensor zur Detektion von Partikeln in einem Fluid gemäß dem Anspruch 1 hat demgegenüber den Vorteil, dass eine reproduzierbare Anlagerung von Partikeln, insbesondere Rußpartikeln auch unter verschiedenen Betriebszuständen zuverlässig möglich ist. Hierzu wird erfindungsgemäß vorgeschlagen, dass die Elektrodenstruktur an die Anströmungsverhältnis des Fluids auf die Oberfläche der Elektrodenstruktur angepasst wird. Gemäß der vorliegenden Erfindung wird bevorzugt ein Sensor mit einem elektrisch gut isolierenden Substratmaterial, insbesondere ein Keramikmaterial verwendet, wobei die Elektrodenanordnung auf dem Substratmaterial oder in dem Substratmaterial vorgesehen ist. Die Elektrodenanordnung wird hierbei erfindungsgemäß durch ein Anströmelement vor Wasserschlag und größeren aggressiven Partikeln innerhalb des Fluids geschützt. Unter einem Fluid wird im Rahmen der vorliegenden Erfindung entweder ein Gas oder eine Gasmischung oder eine Flüssigkeit oder eine Flüssigkeitsmischung oder eine Gas-Flüssigkeitsmischung verstanden, wobei das Fluid ferner insbesondere noch Partikel aufweisen kann. Das Anströmelement, im folgenden auf Schutzrohr genannt, ist erfindungsgemäß derart geformt, dass eine reproduzierbare Anströmung der Elektrodenanordnung möglich ist. Hierbei sollten Richtungsänderungen zwischen der Strömung des Fluids und damit der Transportrichtung der Partikel gegenüber den Elektrodenteilabschnitten vermieden werden und es sollten Geschwindigkeitsänderungen in einem eindeutigen funktionalen Zusammenhang zur Abgasgeschwindigkeit außerhalb des Sensor stehen.

Erfindungsgemäß ist insbesondere bevorzugt, dass die Elektrodenanordnung eine Interdigitalelektrodenanordnung ist. Hierdurch ist es erfindungsgemäß möglich, eine Vielzahl von Elektrodenteilabschnitten vorzusehen, über welche das Fluid strömt. Weiterhin ist es erfindungsgemäß bevorzugt, dass die Elektrodenteilabschnitte und entsprechend auch deren Haupterstreckungsrichtungen im Wesentlichen radial um einen Mittelpunkt herum angeordnet sind. Hierdurch ist es möglich, eine besonders gut reproduzierbare und über unterschiedliche Betriebszustände kontrollierbare Situation der Strömungsverhältnisse (sogenannte Staupunktanströmung) zu erhalten. Ferner ist es alternativ hierzu auch bevorzugt, dass die Elektrodenteilabschnitte und entsprechend auch deren Haupterstreckungsrichtungen parallel angeordnet sind. Hierdurch ist mittels bevorzugt einer laminaren Überströmung der Elektrodenanordnung ebenfalls eine besonders gut reproduzierbare Situation der Strömungsverhältnisse möglich.

Erfindungsgemäß ist ferner bevorzugt, dass das Anströmelement als ein einwandiges oder ein zweiwandiges Rohr ausgebildet ist. Hierdurch ist es möglich, dass das Fluid mehrfach umgelenkt wird bevor es die Elektrodenanordnung erreicht, so dass größere Partikel, die sich nicht gemäß dem Diffusionsgesetzen bewegen und welche im Bereich der Elektrodenanordnung unerwünscht sind, nicht in diesen Bereich gelangen. Ferner ist erfindungsgemäß bevorzugt, dass das Anströmelement im Querschnitt im Wesentlichen rund oder im Wesentlichen eckig ausgebildet wird. Bei einer im Wesentlichen runden Ausbildung wird vorteilhaft erreicht, dass der komplette Sensor gut mit kostengünstig zu Verfügung stehender Befestigungstechnik, insbesondere einem Schraubsockel oder dergleichen beispielsweise in ein abgasführendes Rohr eingesetzt werden kann. Eine eckige Ausbildung des Anströmelementes hat den Vorteil, dass eine besonders gute Anpassung an das im Wesentlichen eckig vorgesehene Substrat und die darauf angeordnete Elektrodenanordnung möglich ist.

Ein weiterer Gegenstand der vorliegenden Erfindung ist ein Verfahren zur Detektion von Partikeln in einem Fluid.

Ausführungsbeispiele der Erfindung sind in der Zeichnung dargestellt und in der nachfolgenden Beschreibung näher erläutert.

### Kurze Beschreibung der Zeichnungen

Es zeigen
Figur 1 eine schematische Darstellung einer Überströmung einer Mehrzahl von Elektrodenteilabschnitten durch ein Partikel aufweisendes Fluid,
Figur 2 eine schematische Darstellung einer ersten Ausführungsform des Sensors mit einer ersten Variante des Anströmelementes in verschiedenen Ansichten,
Figur 3 eine schematische Darstellung der ersten Ausführungsform des Sensors in einer zweiten Variante des Anströmelementes in verschiedenen Ansichten,
Figur 4 eine schematische Darstellung einer zweiten Ausführungsform des erfindungsgemäßen Sensors in verschiedenen Ansichten,
Figur 5 eine Detaildarstellung einer Elektrodenanordnung gemäß der zweiten Ausführungsform des erfindungsgemäßen Sensors und
Figur 6 schematische Darstellungen von weiteren Varianten des Anströmelements.

### Ausführungsformen der Erfindung

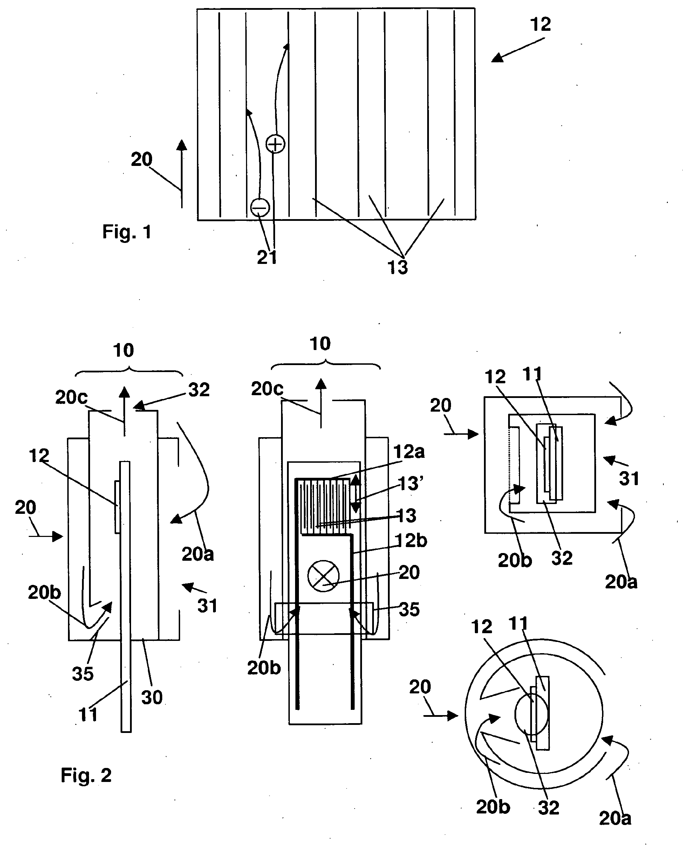

In Figur 1 ist in schematischer Darstellung eine Mehrzahl von Elektrodenteilabschnitten 13 einer im Ganzen in Figur 1 nicht dargestellten Elektrodenanordnung 12 in Draufsicht dargestellt. Beispielhaft sind zwei Partikel 21 dargestellt, welche als elektrisch geladen dargestellt sind, jedoch auch ungeladen sein können und welche aufgrund der an den unterschiedlichen Elektrodenteilabschnitten der Elektrodenanordnung anliegenden unterschiedlichen Spannungsverhältnisse entsprechend an unterschiedliche Elektrodenteilabschnitte 13 gelangen bzw. von diesen angezogen werden. Durch eine im Wesentlichen parallele Strömung des Fluids 20 bzw. der Partikel zu den Elektrodenteilabschnitten 13 wird so eine definierte Rußpartikelanlagerung an die Elektroden 12 bzw. die Elektrodenanordnung 12 des Sensors 10 sichergestellt, so dass auch die eigentliche Meßfunktion des Sensors 10 und deren Genauigkeit verbessert wird. Erfindungsgemäß wird vorgeschlagen, keine Drallströmung im Bereich der Elektrodenanordnung 12 zu nutzen, insbesondere keine Strömung, welche quer zur Haupterstreckungsrichtung 13' der Elektrodenteilabschnitte 13 verläuft. Eine Drallströmung in einem Außenbereich des Schutzrohrs, getrennt von der Elektrodenanordnung 12 ist möglich und trägt zur Möglichkeit eines ungerichteten Einbaus des Sensors bei. Wie in Figur 1 dargestellt, ist es gemäß der Erfindung vorgesehen, dass sich Partikel 21 unterschiedlicher Ladung zu den jeweils entgegengesetzt geladenen Elektroden bzw. Elektrodenteilabschnitten 13 bewegen und dort anlagern. Die Anlagerung ist wohl definiert, sehr effektiv und in hohem Maße reproduzierbar.

In Figur 2 ist in schematischer Darstellung ein erfindungsgemäßer Sensor 10 in einer ersten Ausführungsform des Sensors 10 in verschiedenen Ansichten dargestellt. Im linken Teil der Figur 2 (seitliche Schnittdarstellung) zeigt die Darstellung eine von links auf den Sensor 10 auftreffende Strömung eines bewegten Fluids 20, welches Partikel 21 aufweist, die jedoch in den Figuren 2-6 nicht mehr eigens dargestellt sind. Der Sensor 10 weist ein Anströmelement 30, ein Substrat 11 und eine Elektrodenanordnung 12 auf, wobei die Elektrodenanordnung 12 in aller Regel eine erste Elektrode 12a und eine zweite Elektrode 12b aufweist (vergleiche mittlere Abbildung der Figur 2, welche die Vorderseite im Schnittdarstellung darstellt). In Figur 2 ist der Fall eines doppelwandigen bzw. zweiwandigen Anströmelementes 30 als erste Variante der ersten Ausführungsform dargestellt. Auf der rechten Seite der Figur 2 sind zwei Draufsichten auf den Sensor 10 abgebildet, wobei auf der rechten Seite sowohl eine im Querschnitt eckige als auch eine runde Ausführung des Anströmelementes 30 in Draufsicht dargestellt ist. Aus der linken und der mittleren Abbildung der Figur 2 wird ersichtlich, dass das Fluid 20 durch eine erste Öffnung 31 auf der in Strömungsrichtung des Fluids 20 rückwärtigen Seite des Anströmelementes 30 in das Innere des Anströmelementes 30 hineingelangen kann (vergleiche Strömungspfeil 20a) und nach einer weiteren Umlenkung (vergleiche den Strömungspfeil 20b) in gerichteter Weise auf die Elektrodenanornung 12 gelangen kann bevor das Fluid 20 aus einer weiten Öffnung 32 des Anströmelementes 30 gemäß dem Strömungspfeil 20c wieder in die Hauptströmung des Fluids 20 gelangen kann. Diese Hauptströmung des Fluids 20 findet beispielsweise in einem Abgasrohr oder dergleichen statt, welches jedoch in den Figuren nicht dargestellt ist. In den im rechten Teil der Figur 2 dargestellten Draufsichten auf den Sensor 10 sind ebenfalls die Strömungspfeile 20a und 20b abgebildet.

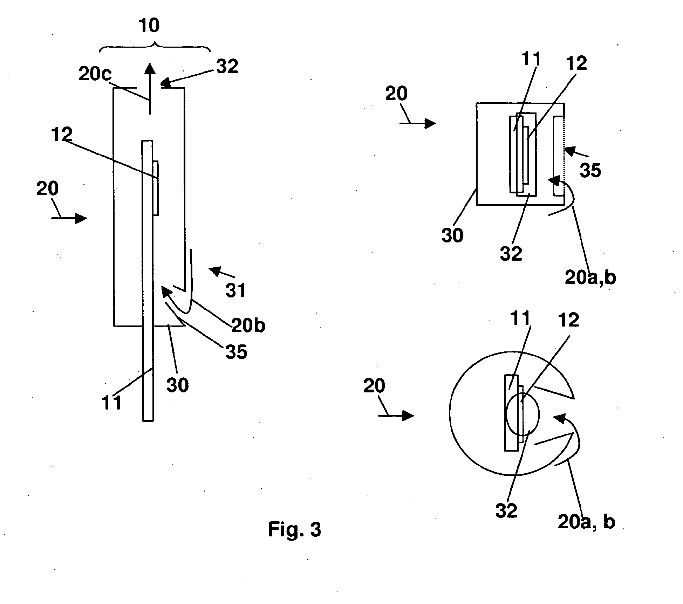

In Figur 3 ist für den Fall eines einwandigen Anströmelementes 30 ebenfalls die erste Ausführungsform des Sensor 10 schematisch und in verschiedenen Ansichten dargestellt. Auf der rechten Seite der Figur 3 sind wiederum zwei Varianten des Anströmelementes 30, nämlich einer runden äußeren Form und einer eckigen äußeren Form schematisch in Draufsicht dargestellt. Ob ein einwandiges oder ein zweiwandiges Anströmelement 30, welches im Folgenden auch Schutzrohr 30 bezeichnet wird, benutzt wird, hängt im Wesentlichen davon ab, ob und welche Partikelgrößen ausgeblendet werden sollen. Kleine Partikel im Bereich von wenigen Nanometern Durchmesser - welche insbesondere bei der motorischen Verbrennung entstehen - verhalten sich entsprechend ihrer Beweglichkeit, d. h. werden mit der Strömung des Fluids im Wesentlichen mitgerissen, während sich größere Partikel wie Wandablagerung, Aschen, nicht motorische Parasitäragglomerate und dergleichen ballistisch bewegen. Durch scharfe Strömungsumlenkungen wie sie beispielsweise im Bereich der ersten Öffnung 31 des Anströmelements 30 auftreten, können ballistische Teilchen ausgeblendet werden. Hierbei ist erfindungsgemäß lediglich der Fall von ein bzw. zweiwandigen Anströmelementen dargestellt, es können jedoch selbstverständlich auch im Rahmen der vorliegenden Erfindung dreiwandige und noch mehrwandige Anströmelemente 30 bei beiden Varianten (Figur 2 und 3) vorgesehen sein. Im Bereich des Strömungspfeils 20b weist das Anströmelement 30 eine Anströmöffnung 35 auf. Diese kann beispielsweise aus einer ausgeformten Klappe bestehen, welche die gerichtete Strömung über die Elektrodenanordnung 12 erzeugt. Diese Strömung verläuft im Fall der ersten Ausführungsform zumindest teilweise im wesentlichen parallel zu den Elektrodenteilabschnitten 13 der Elektrodenanordnung. Da sich bei der ersten Ausführungsform des Sensor 10 die Elektrodenteilabschnitte 13 alle parallel erstrecken, verläuft in die gleiche Richtung auch die Haupterstreckungsrichtung 13' für alle diese Elektrodenteilabschnitte 13 und es wird die Lokalströmung des Fluids 20 durch die Anströmöffnung 35 auch zumindest teilweise im wesentlichen parallel zu diesen Elektrodenteilabschnitten 13 verlaufen.

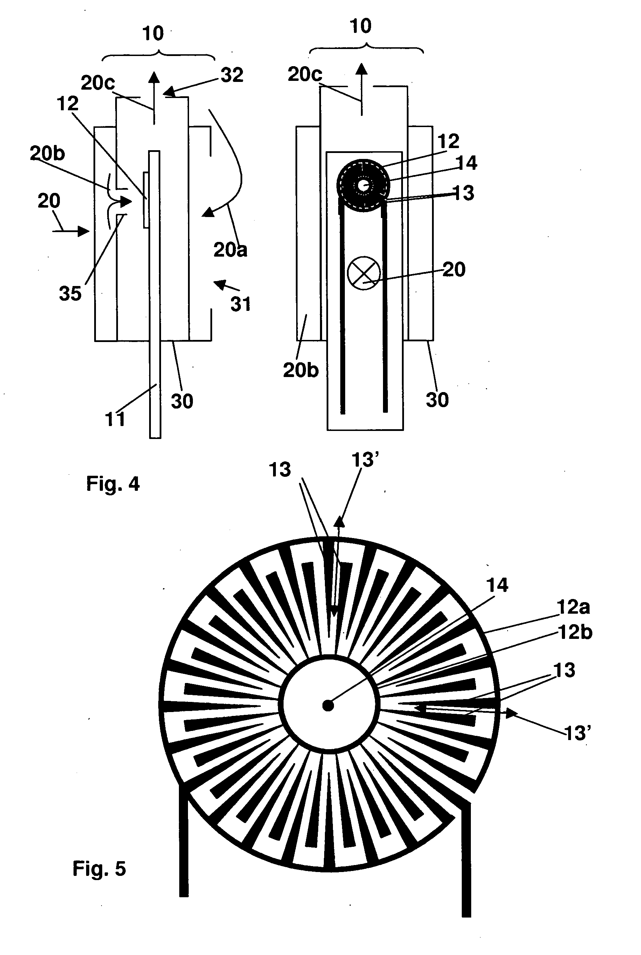

In Figur 4 ist in schematischer Darstellung eine zweite Ausführungsform des erfindungsgemäßen Sensors 10 dargestellt, wobei die Elektrodenanordnung 12 derart vorgesehen ist, dass die einzelnen Elektrodenteilabschnitte 13 und entsprechend auch deren Haupterstreckungsrichtungen 13' im Wesentlichen radial um einen Mittelpunkt 14 angeordnet sind. Die Elektrodenanordnung 12 der zweiten Ausführungsform des Sensor 10 ist in vergrößerter Darstellung nochmals in Figur 5 beispielhaft dargestellt. Es handelt sich auch in diesem Fall um eine Interdigitalelektrodenanordnung wobei jedoch die einzelnen Elektrodenteilabschnitte jeweils radial vom Mittelpunkt 14 aus verlaufen. Bei der zweiten Ausführungsform des erfindungsgemäßen Sensors 10 weist das Anströmelement 30 eine Anströmöffnung 35 auf, welche konzentrisch mit dem Mittelpunkt 14 der Elektrodenanordnung 12 vorgesehen ist, so dass beim Ausströmen des Fluids 20 aus der Anströmöffnung 35 ein radiales Nachaußenströmen des Fluids 20 erfolgt. Auch bei der zweiten Ausführungsform des Sensors 10 kann das Anströmelement 30 entweder einwandig oder zweiwandig ausgebildet sein. In Figur 4 ist die zweiwandige Form dargestellt. Die Anströmöffnung 35 bei der zweiten Ausführungsform des Sensor 10 ist insbesondere Mittels eines kurzen Rohrs der Länge L und des Durchmessers D der Anströmöffnung 35 vorgesehen. Die Optimierung der lokalen Strömungsverhältnisse des Fluids 20 im Bereich der Elektrodenanordnung 12 können bei der zweiten Ausführungsform des Sensors 10 durch die Wahl des Verhältnisses von Durchmesser D zu Länge L des Röhrchens der Anströmöffnung 35 bzw. der Anströmdüse 35 sowie durch die Geometrieauslegung des Anströmelements 30 insgesamt erreicht werden.

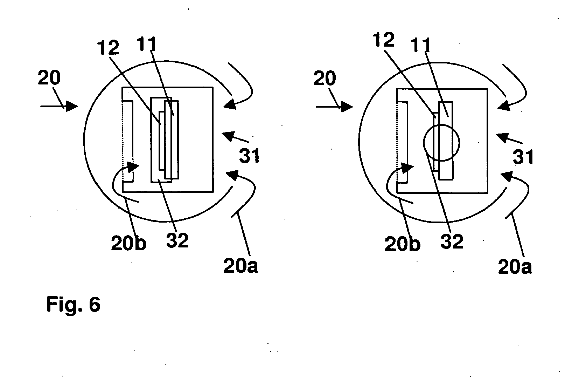

In Figur 6 sind weitere Varianten des Anströmelements 30 schematisch dargestellt. Hierbei sind zwei Varianten eines zweiwandigen Ausströmelements 30 dargestellt, wobei ein runder Querschnitt der äußeren Wandung mit einem eckigen Querschnitt der inneren Wandung kombiniert ist. Der Unterschied bezieht sich auf die Formgebung der weiteren Öffnung 32, welche in der auf der linken Seite der Figur 6 dargestellten Variante rechteckig und in der auf der rechten Seite der Figur 6 dargestellten Variante rund vorgesehen ist.

## Patentansprüche

1. Sensor (10) zur Detektion von Partikeln in einem Fluid (20), insbesondere von Rußpartikeln eines Verbrennungsvorgangs in einem Kraftfahrzeugmotor, wobei der Sensor (10) eine Elektrodenanordnung (12) und ein Anströmelement (30) aufweist, wobei die Elektrodenanordnung (12) eine Mehrzahl von Elektrodenteilabschnitten (13) aufweist und wobei die Elektrodenteilabschnitte (13) sich im wesentlichen länglich in jeweils einer Haupterstreckungsrichtung (13') erstrecken, **dadurch gekennzeichnet, dass** das Anströmelement (30) Strömungsleitungsmittel (31,32,35) aufweist zur Leitung der lokalen Strömung des Fluids (20) derart, dass die lokale Strömung des Fluids (20) im wesentlichen für jeden der Elektrodenteilabschnitte (13) im wesentlichen parallel zu dessen jeweiliger Haupterstreckungsrichtung (13') vorgesehen ist.

2. Sensor (10) nach Anspruch 1, **dadurch gekennzeichnet, dass** die Elektrodenanordnung (12) eine Interdigitalelektrodenanordnung ist.

3. Sensor (10) nach einem der vorhergehenden Ansprüche, **dadurch gekennzeichnet, dass** die Elektrodenteilabschnitte (13) und entsprechend auch deren Haupterstreckungsrichtungen (13') im wesentlichen radial um einen Mittelpunkt (14) herum angeordnet sind.

4. Sensor (10) nach einem der vorhergehenden Ansprüche, **dadurch gekennzeichnet, dass** die Elektrodenteilabschnitte (13) und entsprechend auch deren Haupterstreckungsrichtungen (13') im wesentlichen parallel angeordnet sind.

5. Sensor (10) nach einem der vorhergehenden Ansprüche, **dadurch gekennzeichnet, dass** das Anströmelement (30) als ein einwandiges oder ein zweiwandiges oder eine mehrwandiges Rohr ausgebildet ist.

6. Sensor (10) nach einem der vorhergehenden Ansprüche, **dadurch gekennzeichnet, dass** das Anströmelement (30) im wesentlichen rund oder im wesentlichen eckig ausgebildet ist.

7. Sensor (10) nach einem der vorhergehenden Ansprüche, **dadurch gekennzeichnet, dass** der Sensor (10) ein elektrisch gut isolierendes Substratmaterial (11), insbesondere ein Keramikmaterial, aufweist, wobei die Elektrodenanordnung (12) auf dem Substratmaterial (11) oder in dem Substratmaterial (11) vorgesehen ist.

8. Verfahren zur Detektion von Partikeln in einem Fluid (20), insbesondere von Rußpartikeln eines Verbrennungsvorgangs in einem Kraftfahrzeugmotor, wobei eine Elektrodenanordnung (12) mit einer Mehrzahl von Elektrodenteilabschnitten (13) vorgesehen ist, die sich im wesentlichen länglich in jeweils einer Haupterstreckungsrichtung (13') erstrecken, **dadurch gekennzeichnet, dass** die lokale Strömung des Fluids (20) im wesentlichen für jeden der Elektrodenteilabschnitte (13) im wesentlichen parallel zu dessen jeweiliger Haupterstreckungsrichtung (13') erfolgt.

## Claims

1. Sensor (10) for detecting particles in a fluid (20), in particular soot particles from a combustion process in a motor vehicle engine, with the sensor (10) having an electrode arrangement (12) and an incident-flow element (30), with the electrode arrangement (12) having a multiplicity of electrode partial sections (13) and with the electrode partial sections (13) extending substantially in elongate fashion in each case in a main direction of extent (13'), **characterized in that** the incident-flow element (30) has flow-conducting means (31,32,35) for conducting the local flow of the fluid (20) in such a way that the local flow of the fluid (20) substantially for each of the electrode partial sections (13) runs substantially parallel to the respective main direction of extent (13') thereof.

2. Sensor (10) according to Claim 1, **characterized in that** the electrode arrangement (12) is an interdigital electrode arrangement.

3. Sensor (10) according to one of the preceding claims, **characterized in that** the electrode partial sections (13) and correspondingly also the main directions of extent (13') thereof are arranged substantially radially around a central point (14).

4. Sensor (10) according to one of the preceding claims, **characterized in that** the electrode partial sections (13) and correspondingly also the main directions of extent (13') thereof are arranged substantially parallel.

5. Sensor (10) according to one of the preceding claims, **characterized in that** the incident-flow element (30) is formed as a single-wall or double-wall or multiple-wall pipe.

6. Sensor (10) according to one of the preceding claims, **characterized in that** the incident-flow element (30) is of substantially round or substantially angular design.

7. Sensor (10) according to one of the preceding claims, **characterized in that** the sensor (10) has an electrically highly insulating substrate material (11), in particular a ceramic material, with the electrode arrangement (12) being provided on the substrate material (11) or in the substrate material (11).

8. Method for detecting particles in a fluid (20), in particular soot particles from a combustion process in a motor vehicle engine, with an electrode arrangement (12) being provided which has a multiplicity of electrode partial sections (13) which extend substantially in elongate fashion in each case in a main direction of extent (13'), **characterized in that** the local flow of the fluid (20) substantially for each of the electrode partial sections (13) runs substantially parallel to the respective main direction of extent (13') thereof.

## Revendications

1. Capteur (10) pour la détection de particules dans un fluide (20), notamment de particules de suie d'une opération de combustion dans un moteur de véhicule automobile, le capteur (10) présentant un agencement d'électrodes (12) et un élément d'afflux (30), l'agencement d'électrodes (12) présentant une pluralité de portions d'électrodes (13) et les portions d'électrodes (13) s'étendant essentiellement longitudinalement dans une direction d'étendue principale respective (13'), **caractérisé en ce que** l'élément d'afflux (30) présente des moyens de guidage de l'écoulement (31, 32, 35) pour guider l'écoulement local de fluide (20) de telle sorte que l'écoulement local de fluide (20) soit prévu essentiellement parallèlement à sa direction d'étendue principale respective (13') essentiellement pour chacune des portions d'électrodes (13).

2. Capteur (10) selon la revendication 1, **caractérisé en ce que** l'agencement d'électrodes (12) est un agencement d'électrodes interdigitales.

3. Capteur (10) selon l'une quelconque des revendications précédentes, **caractérisé en ce que** les portions d'électrodes (13) et de manière correspondante aussi leurs directions d'étendue principale respectives (13') sont disposées essentiellement radialement autour d'un centre (14).

4. Capteur (10) selon l'une quelconque des revendications précédentes, **caractérisé en ce que** les portions d'électrodes (13) et de manière correspondante aussi leurs directions d'étendue principale respectives (13') sont disposées essentiellement parallèlement.

5. Capteur (10) selon l'une quelconque des revendications précédentes, **caractérisé en ce que** l'élément d'afflux (30) est réalisé sous forme de tube à une paroi ou de tube à deux parois ou à plusieurs parois.

6. Capteur (10) selon l'une quelconque des revendications précédentes, **caractérisé en ce que** l'élément d'afflux (30) est réalisé sous forme essentiellement ronde ou essentiellement polygonale.

7. Capteur (10) selon l'une quelconque des revendications précédentes, **caractérisé en ce que** le capteur (10) présente un matériau de substrat (11) bon isolant électrique, notamment un matériau en céramique, l'agencement d'électrodes (12) étant prévu sur le matériau de substrat (11) ou dans le matériau de substrat (11).

8. Procédé de détection de particules dans un fluide (20), notamment de particules de suie d'une opération de combustion dans un moteur de véhicule automobile, dans lequel un agencement d'électrodes (12) est pourvu d'une pluralité de portions d'électrodes (13), qui s'étendent essentiellement longitudinalement dans une direction d'étendue principale respective (13'), **caractérisé en ce que** l'écoulement local de fluide (20) a lieu essentiellement parallèlement à sa direction d'étendue principale respective (13') essentiellement pour chacune des portions d'électrodes (13).
